# EUROPEAN PATENT APPLICATION

(11) **EP 4 521 808 A1**
(43) Date of publication of application: **12.03.2025**
(21) Application number: 22940634.3
(22) Date of filing: 06.05.2022
(51) Int. Cl.: H04W 24/06

(54) **TIME DELAY DIFFERENCE INFORMATION REPORTING METHOD AND APPARATUS, DEVICE, AND STORAGE MEDIUM**

(71) Applicant: Beijing Xiaomi Mobile Software Co., Ltd., Beijing 100085 (CN)
(72) Inventor: WU, Jinhua, Beijing 100085 (CN); LIU, Jianning, Beijing 100085 (CN); SHEN, Yang, Beijing 100085 (CN); MAO, Yuxin, Beijing 100085 (CN)
(74) Representative: Hersina, Günter
(86) International application number: PCT/CN2022/091247
(87) International publication number: WO 2023/212940

(57) **Abstract**

The present application relates to the field of mobile communications. Disclosed are a time delay difference reporting method and apparatus, a device, and a storage medium. The method comprises: a first network element receiving a subscription request sent by a second network element, wherein the subscription request is used for requesting a time delay difference between data streams of a subscribed service; receiving report information sent by a third network element in response to the subscription request; and sending the report information to the second network element. According to the present application, a time delay difference scheme for data streams of a subscribed service is provided, and report information of a subscribed time delay difference is reported by a third network element, so the accuracy of a reported time delay difference between data streams is ensured, thereby ensuring a synergistic effect between data streams and improving reliability of operation of a service.

## Description

### TECHNICAL FIELD

The present invention relates to the field of mobile communications, and in particular, to a method and an apparatus for reporting delay difference information, a device, and a storage medium.

### BACKGROUND

In mobile communication systems, terminals interact with application servers to achieve service operations. For the running service, the service run by the terminal involves data streams, and for the transmitted data streams, the normal operation of the service needs to meet the delay difference. The terminal may involve multiple data streams, and how to coordinate between multiple data streams is an urgent problem to be solved.

### SUMMARY

Embodiments of the present invention provide a method, apparatus, device, and storage medium for reporting delay difference information, and provide a scheme for subscribing to delay difference information of data streams of the service. A third network element reports report information corresponding to the subscribed delay difference information, and a first network element determines the delay difference information based on the report information and reports it to a second network element, ensuring the accuracy of the reported delay difference between the data streams, thereby ensuring the collaborative effect between the data streams and improving the reliability of service operation. The technical solution is as follows.

According to an aspect of the present invention, a method for reporting delay difference information is provided. The method is performed or executed by a first network element, and the method includes:
receiving a subscription request sent by a second network element, wherein the subscription request is used to request subscribed delay difference information of data streams of service;
sending the subscription request to a third network element;
receiving report information sent by the third network element in response to the subscription request; and
sending delay difference information to the second network element, wherein the delay difference information is determined based on the report information.

According to an aspect of the present invention, a method for reporting delay difference information is provided. The method is performed or executed by a second network element, and the method includes:
sending a subscription request to a first network element, wherein the subscription request is used to request subscribing to delay difference information of data streams of service;
receiving the delay difference information sent by the first network element, wherein the delay difference information is determined based on report information, and the report information is reported by a third network element in response to the subscription request.

According to an aspect of the present invention, a method for reporting delay difference information is provided. The method is performed or executed by a third network element, and the method includes:
receiving a subscription request sent by a first network element, wherein the subscription request is used to request subscribing to delay difference information of data streams of service;
sending report information to the first network element in response to the subscription request.

According to an aspect of the present invention, a method for reporting delay difference information is provided. The method is performed or executed by a second network element, and the method includes:
sending a subscription request to at least one third network element, wherein the subscription request is used to request subscribing to delay difference information of data streams of service;
receiving the delay difference information sent by the at least one third network element, wherein the delay difference information is reported by the third network element in response to the subscription request.

According to an aspect of the present invention, a method for reporting delay difference information is provided. The method is performed or executed by a third network element, and the method includes:
receiving a subscription request sent by a second network element, wherein the subscription request is used to request subscribing to delay difference information of data streams of service;
sending the delay difference information to the second network element, wherein the delay difference information is reported by the second network element in response to the subscription request.

According to an aspect of the present invention, an apparatus for reporting delay difference information is provided. The apparatus includes:
a receiving module, configured to receive a subscription request sent by a second network element, wherein the subscription request is used to request subscribing to delay difference information of data streams of service; and t
a sending module, configured to send the subscription request to a third network element;
the receiving module is further configured to receive report information sent by the third network element in response to the subscription request; and
the sending module is further configured to send delay difference information to the second network element, wherein the delay difference information is determined based on the report information.

According to an aspect of the present invention, an apparatus for reporting delay difference information is provided. The apparatus includes:
a sending module, configured to send a subscription request to a first network element, wherein the subscription request is used to request subscribing to delay difference information of data streams of service;
a receiving module, configured to receive the delay difference information sent by the first network element, wherein the delay difference information is determined based on report information, and the report information is reported by a third network element in response to the subscription request.

According to an aspect of the present invention, an apparatus for reporting delay difference information is provided. The apparatus includes:
a receiving module, configured to receive a subscription request sent by a first network element, wherein the subscription request is used to request subscribing to delay difference information of data streams of service;
a sending module, configured to send report information to the first network element in response to the subscription request.

According to an aspect of the present invention, an apparatus for reporting delay difference information is provided. The apparatus includes:
a sending module, configured to send a subscription request to at least one third network element, wherein the subscription request is used to request subscribing to delay difference information of data streams of service;
a receiving module, configured to receive the delay difference information sent by the at least one third network element, wherein the delay difference information is reported by the third network element in response to the subscription request.

According to an aspect of the present invention, an apparatus for reporting delay difference information is provided. The apparatus includes:
a receiving module, configured to receive a subscription request sent by a second network element, wherein the subscription request is used to request subscribing to delay difference information of data streams of service;
a sending module, configured to send the delay difference information to the second network element, wherein the delay difference information is reported by the second network element in response to the subscription request.

According to an aspect of the present invention, a network element is provided. The network element includes: a processor; a transceiver coupled with the processor; and a memory configured to store executable instructions by the processor, wherein the processor is configured to load and execute the executable instructions to implement the method for reporting delay difference information as described in the above aspects.

According to an aspect of the present invention, a computer readable storage medium is provided. The readable storage medium stores executable program codes, which are configured to be loaded and executed by the processor, to implement the method for reporting delay difference information as described in the above aspects.

According to an aspect of the present invention, a chip is provided. The chip includes programmable logic circuits and/or program instructions, which are configured to implement the method for reporting delay difference information as described in the above aspects when the chip runs on a network element.

According to an aspect of the present invention, a computer program product is provided. The computer program product is configured to implement the method for reporting delay difference information as described in the above aspects when executed by a processor of a network element.

In the delay difference information reporting scheme provided in the embodiments of the present invention, a scheme for subscribing to delay difference information of data streams of the service is provided. The third network element reports the report information corresponding to the subscribed delay difference information, and the first network element determines the delay difference information based on the report information and reports it to the second network element, ensuring the accuracy of the reported delay difference between the data streams and the collaborative effect between the data streams, thereby improving the reliability of service operation.

### BRIEF DESCRIPTION OF THE DRAWINGS

In order to more clearly illustrate the technical solution in the embodiments of the invention, a brief introduction will be given to the drawings required for the description of the embodiments. It is obvious that the drawings described below are only some embodiments of the present application. For those skilled in the art, other drawings can be obtained based on these drawings without creative labor.
Fig. 1 is a block diagram of a communication system provided in an exemplary embodiment of the present invention.
Fig. 2 is a flowchart of a method for reporting delay difference information provided in an exemplary embodiment of the present invention.
Fig. 3 is a flowchart of a method for reporting delay difference information provided in an exemplary embodiment of the present invention.
Fig. 4 is a flowchart of a method for reporting delay difference information provided in an exemplary embodiment of the present invention.
Fig. 5 is a block diagram of an apparatus for reporting delay difference information provided in an exemplary embodiment of the present invention.
Fig. 6 is a block diagram of another apparatus for reporting delay difference information provided in an exemplary embodiment of the present invention.
Fig. 7 is a block diagram of an apparatus for reporting delay difference information provided in an exemplary embodiment of the present invention.
Fig. 8 is a block diagram of an apparatus for reporting delay difference information provided in an exemplary embodiment of the present invention.
Fig. 9 is a block diagram of another apparatus for reporting delay difference information provided in an exemplary embodiment of the present invention.
Fig. 10 is a block diagram of an apparatus for reporting delay difference information provided in an exemplary embodiment of the present invention.
Fig. 11 is a block diagram of an apparatus for reporting delay difference information provided in an exemplary embodiment of the present invention.
Fig. 12 is a block diagram of a communication device provided in an exemplary embodiment of the present invention.

### DETAILED DESCRIPTION

In order to clarify the purpose, technical solution, and advantages of the present invention, a further detailed description of the embodiments of the present invention will be provided below in conjunction with the accompanying drawings.

The exemplary embodiments will be described in detail here, with examples shown in the accompanying drawings. When referring to the accompanying drawings, unless otherwise indicated, the same numbers in different drawings represent the same or similar elements. The implementations described in the following exemplary embodiments do not represent all implementations consistent with the present invention. On the contrary, they are only examples of devices and methods consistent with some aspects of the present invention as described in the accompanying claims.

The terms used in this invention are for the sole purpose of describing specific embodiments and are not intended to limit this invention. The singular forms "a", "the" and "said" used in this invention and the accompanying claims are also intended to include the plural form, unless the context clearly indicates otherwise. It should also be understood that the term "and/or" used in this article refers to and includes any or all possible combinations of at least one associated listed item.

It should be understood that although various information may be described using terms such as first, second, third, etc. in this invention, such information should not be limited to these terms. These terms are only used to distinguish information for the same type from each other. For example, without departing from the scope of this invention, the first information can also be referred to as the second information, and similarly, the second information can also be referred to as the first information. Depending on the context, the word "if" used here can be interpreted as "when......" or "in case that......" or "in response to determine ......".

It should be noted that the information (including but not limited to user device information, user personal information, etc.), data (including but not limited to data used for analysis, stored data, displayed data, etc.), and signals involved in this invention are all authorized by the user or fully authorized by all parties, and the collection, use, and processing of relevant data must comply with relevant laws, regulations, and standards of relevant countries and regions.

In the following, the application scenarios of this invention will be explained.

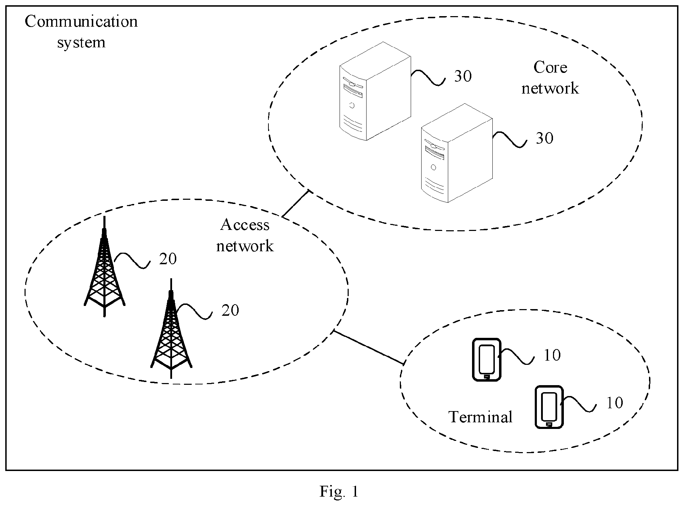

Fig. 1 shows a block diagram of a communication system provided in an exemplary embodiment of the present invention. The communication system may include a terminal 10, a access network device 20 and a core network device 30.

The number of terminals 10 is usually multiple, and one or more terminals 10 can be distributed within the cell managed by each access network device 20. Terminals 10 may include various handheld devices with wireless communication capabilities, in-vehicle devices, wearable devices, computing devices, or other processing devices connected to wireless modems, as well as various forms of user equipment (UE), mobile stations (MS), and so on. For the convenience of description, in the embodiments of this invention, the devices mentioned above are collectively referred to as terminals.

The access network device 20 is a device deployed in the access network to provide wireless communication functionality for terminals 10. For the convenience of description, in the embodiments of the present invention, the devices that provide wireless communication function for terminals 10 are collectively referred to as network devices. The network device 20 and terminal 10 can establish a connection through an air interface for communication, including signaling and data exchange. There may be multiple network devices 20, and communication between two adjacent network devices 20 can also be conducted through wired or wireless means. The terminal 10 can switch between different network devices 20, that is, establish connections with different network devices 20.

The network device 20 may include various forms of macro base stations, micro base stations, relay stations, access points, and so on. In systems using different wireless access technologies, the names of devices with network equipment functions may vary, such as gNodeB or gNB in 5G NR (New Radio) systems. With the evolution of communication technology, the name 'network device' may change.

The core network device 30 is a device deployed in the core network. The main functions of the core network device 30 are to provide user connections, manage users, and complete service hosting, serving as an interface between the hosting network and external networks. The core network device 30 includes various core network elements with various management functions. For example, the core network elements include AMF (Access and Mobility Management Function) elements, SMF (Session Management Function) elements, PCF (Policy Control Function) elements, UPF (User Plane Function) elements, NSSF (The Network Slice Selection Function) elements, AUSF (Authentication Server Function) elements, UDM (Unified Data Management) elements, AF (Application Function) elements, NEF (Network Exposure Function) elements, etc.

In some embodiments, the terminal involves multiple types of services, for example, mobile media services, cloud AR (Augmented Reality) or cloud VR (Virtual Reality) services, cloud gaming, video based machine and drone remote control, and other services. The services involved in the terminal include multimodal data streams. The multimodal data refers to data input from the same device or different devices for the same service or application, and these data can be output to one or more destination devices. In addition, the various data streams in multimodal data have a certain correlation, which means that multiple data streams can influence each other, for example, synchronization of audio and video streams, synchronization of touch and vision, etc. The data streams of this type of media service themselves, respective data streams, and the demand for network transmission of these data streams all have some common characteristics. The effective identification and utilization of these characteristics will be more helpful for the transmission and control of networks and services, as well as for service security and user experience.

Optionally, the services in this invention can be collectively referred to as XRM (Extended Reality and Media Services) services, considering the correlation between data streams in mobile communication systems.

In embodiments of the present invention, the terminal interacts with a cloud server to exchange service data, and the cloud server transmits data streams to the AF network element. For the AF network element, it interacts with the NEF network element to ensure the correlation between data streams.

In some embodiments, elements of the present invention relate to a first network element, a second network element, and a third network element. The first network element can interact with the second and third network elements, and it can also be understood that the first network element is an intermediary between the second and third network elements. Alternatively, the second network element and the third network element can directly interact with each other.

Optionally, the first network element is an NEF network element, the second network element is an AF network element, and the third network element is a PCF network element.

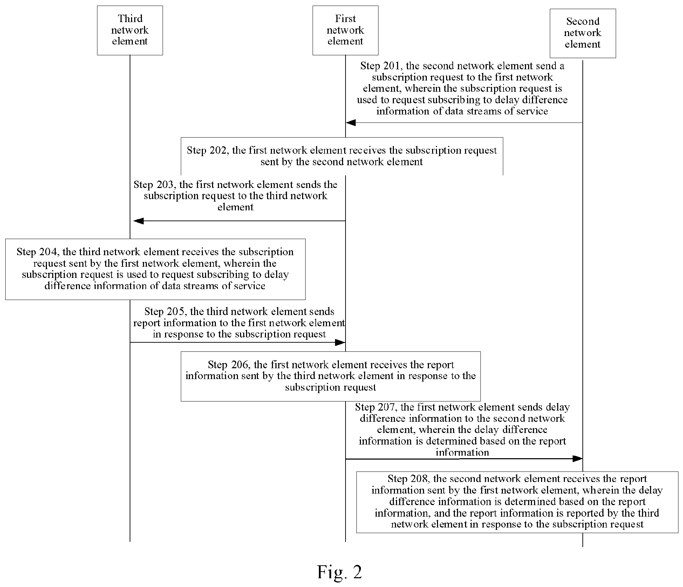

Fig. 2 shows a flowchart of a method for reporting delay difference information provided in an exemplary embodiment of the present invention, which can be applied to the network elements included in the core network equipment as shown in Figure 1. The method includes at least some of the following contents.

In step 201, a second network element sends a subscription request to a first network element, wherein the subscription request is used to request subscribing to delay difference information of data streams of service.

In step 202, the first network element receives the subscription request sent by the second network element.

In step 203, the first network elements sends the subscription request to a third network element.

In embodiments of the present invention, data streams of the service are transmitted between the second network element and the terminal, and the second network element can determine the relationship between the transmitted data streams of the service by subscribing to the delay difference information of the transmitted data streams.

In some embodiments, the subscription request can also be understood as requesting delay difference information related to the data streams of the subscribed service. Alternatively, the subscription request can also be understood as requesting the delay difference information corresponding to the data streams of the subscribed service.

The second network element sends the subscription request to the first network element, through which it can subscribe to the delay difference information of the data stream of the service. For the first network element, after receiving the subscription request, it can determine the delay difference information of the data stream of the service that the second network element needs to subscribe to.

For any two data streams, each data stream corresponds to one delay, and the difference in delay between the two data streams can be understood as the delay difference. For example, the delay difference is 2ms (milliseconds), 3ms, or other values, which is not limited in embodiments of the present invention.

In some embodiments, the delay corresponding to each data stream refers to the time required for the data stream to be transmitted from the sender to the receiver.

Optionally, the delay difference corresponding to the delay difference information includes multiple types of delay differences. For example, the delay difference includes at least one of the following.

### (1) average time delay

The average delay difference refers to the average of multiple delay differences. For example, after determining the delay differences of multiple data streams, the average delay difference is obtained by taking the average of the determined multiple delay differences of the data streams.

For example, if the obtained delay differences include delay difference 1, delay difference 2, and delay difference 3, then the average of delay difference 1, delay difference 2, and delay difference 3 is obtained as the average delay difference.

### (2) maximum delay difference

The maximum delay difference refers to the largest delay difference among multiple delay differences. For example, after determining the delay differences of multiple data streams, the determined multiple delay differences of the multiple data streams are compared to obtain the delay difference with the largest value among the multiple delay differences, which is used as the maximum delay difference.

For example, if the obtained delay differences include delay difference 1, delay difference 2, and delay difference 3, then the values of delay difference 1, delay difference 2, and delay difference 3 are compared. If delay difference 1 is greater than delay difference 2 and delay difference 2 is greater than delay difference 3, then delay difference 1 is taken as the maximum delay difference.

### (3) minimum delay difference

The minimum delay difference refers to the smallest delay difference among multiple delay differences. For example, after determining the delay differences of multiple data streams, the determined multiple delay differences of the multiple data streams are compared to obtain the delay difference with the smallest value among the multiple delay differences, which is used as the minimum delay difference.

For example, if the obtained delay differences include delay difference 1, delay difference 2, and delay difference 3, then the values of delay difference 1, delay difference 2, and delay difference 3 are compared. If delay difference 1 is less than delay difference 2 and delay difference 2 is less than delay difference 3, then delay difference 1 is taken as the minimum delay difference.

### (4) delay difference range

The delay difference range refers to the range to which the delay difference belongs. For example, the delay difference range is 2ms to 5ms, or the delay difference range is 5ms to 15ms, which is not limited in the embodiments of the present invention.

In step 204, the third network element receives the subscription request sent by the first network element, wherein the subscription request is configured to request delay difference information of data streams of the subscribed service.

In embodiments of the present invention, the third network element may receive the subscription request sent by the first network element, thereby determining the information subscribed to by the second network element, and monitoring the information subscribed to by the second network element.

In step 205, the third network element sends report information to the first network element, in response to the subscription request.

In some embodiments, after receiving the subscription request, the third network element can determine the data streams subscribed to by the second network element, and the third network element triggers the monitoring of the requested data streams to obtain the report information of the data streams.

In step 206, the first network element receives the report information sent by the third network element in response to the subscription request.

In embodiments of the present invention, after receiving the subscription request, the third network element can determine the report information corresponding to the subscription request based on the subscription request, and then send the report information to the first network element.

The report information includes the delays of the subscribed data streams of the service.

In step 207, the first network element sends delay difference information to the second network element, wherein the delay difference information is determined based on the report information.

In step 208, the second network element receives the delay difference information sent by the first network element, wherein the delay difference information is determined based on the report information, and the report information is reported by the third network element in response to the subscription request.

In embodiments of the present invention, after receiving the report information sent by the third network element, the first network element can determine the delay difference information based on the received report information, and then send the determined delay difference information to the second network element, which receives the delay difference information sent by the first network element.

It should be noted that this embodiment of the present invention is illustrated taking the second network element subscribing to the delay difference information of the data streams through the subscription request as an example. In another embodiment, the second network element can also subscribe to the delay information of the data streams through the subscription request, so that the first network element reports the delay information of the data streams. Alternatively, the second network element can subscribe to the delay information and delay difference information of the data streams through the subscription request, so that the first network element reports the delay information and delay difference information of the data streams.

It should be noted that the steps executed by the network device can form a separate embodiment, and the steps executed by the terminal can also form a separate embodiment, which is not limited in the embodiments of the present invention.

In the solution provided by embodiments of the present invention, a scheme for subscribing to time delay information of data streams of the service is provided. The third network element reports the report information corresponding to the subscribed delay difference information, and the first network element determines the delay difference information based on the report information and reports it to the second network element, ensuring the accuracy of the reported delay difference between the data streams, thereby ensuring the collaborative effect between the data streams and improving the reliability of service operation.

On the basis of the embodiment shown in Fig. 2, the first network element needs to determine the third network element, and then send the subscription request to the determined third network element. In embodiments of the present invention, the first network element can determine the third network element in two ways.

First way: The first network element determines at least one third network element based on the subscription request and sends the subscription request to each third network element.

In embodiments of the present invention, after receiving the subscription request, the first network element can determine at least one third network element based on the subscription request, and then send the subscription request to the determined third network element, so that the third network element can return the report information corresponding to the subscription request.

Optionally, the first network element can use any of the following methods to determine the third network element.
(1) The first network element determines at least one third network element based on the subscription request and a network storage function.
   The network storage function includes the third network element corresponding to the event subscribed to by the subscription request, and the first network element can determine at least one third network element based on the subscription request and the network storage function after receiving the subscription request.
(2) The first network element determines at least one third network element based on the subscription request and configuration information.

The configuration information is the configuration stored locally by the first network element. Moreover, the configuration information includes the third network element corresponding to the time subscribed to by the subscription request. After receiving the subscription request, the first network element can determine at least one third network element based on the subscription request and configuration information.

In the solution provided by embodiments of the present invention, after receiving the subscription request, the first network element can determine at least one third network element based on the network storage function or its own configuration information, and then send the subscription request to the determined at least one third network element. This not only expands the way of determining the third network element, but also improves the accuracy of sending the subscription request.

Second way: the first network element sends the subscription request to a default third network element based on the subscription request.

In embodiments of the present invention, the default third network element is used to forward the subscription request to other third network elements. That is to say, after receiving the subscription request sent by the first network element, the default third network element can forward the received subscription request to other third network elements.

The default third network element is the network element to which the first network element transmits the subscription request. After receiving the subscription request, the default third network element can also forward the received subscription request to other third network elements. It can also be understood that the default third network element is a relay network element with forwarding function. The default third network element is a network element agreed upon through a communication protocol, or a pre-configured network element, or a default network element, or a network element determined by other means, which is not limited in the embodiments of the present invention.

In embodiments of the present invention, the first network element sends the received subscription request to the default third network element, which can then forward the subscription request to other third network elements, so that all eligible third network elements receive the subscription request.

It should be noted that the above embodiment is based on the example of the first network element determining the third network element and then sending the subscription request. In another embodiment, if the first network element determines multiple third network elements, then the first network element sending the subscription request includes any of the following situations.

In some embodiments, the first network element sends the subscription request to each of the multiple third network elements.

In an embodiment of the present invention, if the first network element determines multiple third network elements, the first network element needs to send subscription requests to each of the determined third network elements respectively.

In other embodiments, the first network element sends the subscription request to the default third network element among the multiple third network elements.

In an embodiment of the present invention, if the first network element determines multiple third network elements, the first network element sends the subscription request to the default third network element among the multiple third network elements, and then the default third network element sends the received subscription request to other third network elements, so that all determined third network elements can receive the subscription request.

In addition, if the first network element determines multiple third network elements, the first network element sends subscription requests to multiple third network elements, and in this case, the first network element will also receive report information returned by multiple third network elements.

In some embodiments, the first network element receives the report information sent by each of the multiple third network elements.

In an embodiment of the present invention, each of the determined multiple third network elements determines report information based on the subscription request, and then sends the determined report information to the first network element. The first network element can receive the report information sent by each of the multiple third network elements.

Optionally, after receiving the report information sent by the multiple third network elements, the first network element will also process the multiple report information, to send the delay difference information to the second network element.

In an embodiment of the present invention, the first network element aggregates multiple report information to obtain delay difference information, and sends the delay difference information to the second network element.

In an embodiment of the present invention, after the third network element sends report information to the first network element, in fact, multiple report information correspond to different delays of data streams. After receiving multiple report information, the first network element needs to process these multiple report information to obtain the delay difference information subscribed by the second network element, and then send the obtained delay difference information to the second network element.

In some embodiments, the report information includes the delay, and the first network elements performs the following steps to aggregate the report information.

The first network element determines the delay difference between the data streams of the service based on the delay sent by each of the multiple third network elements, and sends the delay and/or delay difference to the second network element.

In an embodiment of the present invention, the third network element can obtain the delay of the data stream according to the subscription request, and then multiple third network elements can send the delay to the first network element respectively. The first network element can receive the delay sent by each third network element in the multiple third network elements, and then the first network element determines the delay difference between the data streams of the service based on the received delay sent by each third network element in the multiple third network elements, and then sends the delay and/or delay difference of the data stream to the second network element.

In some embodiments, if the subscription request indicates subscribing to the delay difference of the data streams, then for the first network element, it is sufficient for the first network element to send the determined delay difference of the data streams to the second network element.

In an embodiment of the present invention, if the subscription request indicates subscribing to the delay difference between the data streams, for the first network element, the delay difference between the data streams requested by the second network element is determined based on the subscription request. After determining the delay difference between the data streams, the determined delay difference between the data streams is sent to the second network element.

For example, if the second network element requests to obtain the delay difference between data stream 1 and data stream 2, as well as the delay difference between data stream 2 and data stream 4, the first network element determines the delay difference between data stream 1 and data stream 2 and the delay difference between data stream 2 and data stream 4, and then the first network element sends the determined delay differences to the second network element.

In other embodiments, the subscription request indicates subscribing to the delay of the data stream. Then, for the first network element, it is sufficient for the first network element to send the determined delay of the data stream to the second network element.

In an embodiment of the present invention, if the subscription request indicates subscribing to the delay of the data stream, for the first network element, the delay of the data stream requested by the second network element is determined based on the subscription request. After determining the delay of the data stream, the determined delay of the data stream is sent to the second network element.

For example, if the second network element requests to obtain the delay of data streams 1, 2, and 3, the first network element will send the determined delay to the second network element after receiving the delay of data streams 1, 2, and 3.

In other embodiments, the subscription request indicates subscribing to the delay and delay difference of the data streams. Then, for the first network element, the first network element sends the determined delay and delay difference of the data streams to the second network element.

In an embodiments of the present invention, if the subscription request indicates subscribing to the delay difference between the data streams and the delay of the data streams, then for the first network element, the delay difference between the data streams and the delay of the data streams requested to be subscribed by the second network element are determined based on the subscription request. After determining the delay difference between the data streams and the delay of each data stream, the determined delay difference between the data streams and the delay of the data streams are sent to the second network element.

For example, if the second network element requests to obtain the delay difference between data stream 1 and data stream 2, as well as the delay of data stream 2 and data stream 4, then the first network element determines the delay difference between data stream 1 and data stream 2, and the delay of data stream 2 and data stream 4, and sends the determined delay difference and the delay to the second network element.

In some embodiments, the delay and delay difference are statistical values at the current time. Alternatively, the delay and delay difference are statistical values within the first duration.

Optionally, if the delay and delay difference are the statistical values at the current time, it means that the third network element sends the delay calculated at the current time to the first network element, and then the first network element determines the delay difference and sends the delay and delay difference of the data streams to the second network element.

Optionally, if the delay and delay difference are statistical values within the first duration, it means that the third network element counts the delay within the first duration and sends the counted delay to the first network element. Then, the first network element will determine the delay difference based on the delay counted within the first duration and send the delay and delay difference of the data streams to the second network element.

In the solution provided by the embodiments of the present invention, the third network element reports the delay of the data streams to the first network element, and then the first network element reports the delay and/or delay difference of the data streams to the second network element, so that the second network element can receive the subscribed delay difference of data streams, ensuring the accuracy of the reported delay difference between the data streams, thereby ensuring the coordinative effect between the data streams and improving the reliability of service operation.

On the basis of the embodiment shown in Fig. 2, the second network element carries the subscribed event in the sent subscription request, in order to obtain the delay difference of the data streams corresponding to the event.

In some embodiments, the subscription request includes the event requested to be subscribed, the event includes any of the followings.

### (1) requesting a delay of a target data stream

At least one data stream of the service is transmitted between the terminal and the second network element. For the second network element, it carries the request for subscribing to the delay of the target data stream in the subscription request, so that the first network element can request the delay of the target data stream from the third network element.

### (2) requesting a delay difference between any two target data streams

At least one data stream of the service is transmitted between the terminal and the second network element. For the second network element, the second network element carries the request for subscribing to the delay difference of any two target data streams in the subscription request, so that the first network element can request the third network element to obtain the delay of the target data stream, and then determine the delay difference between the two target data streams based on the obtained delay of the target data stream.

### (3) a ratio of the delay difference to a maximum allowable delay difference

The maximum allowable delay difference refers to the delay difference required for the normal operation of the service corresponding to the data streams. The maximum allowable delay difference is specified by the communication protocol, configured by the network device, or configured in other ways, which is not limited by the embodiments of this invention.

In an embodiment of the present invention, at least one data stream of the service is transmitted between the terminal and the second network element. For the second network element, the second network element carries the request for subscribing to the delay of any two target data streams in the subscription request, so that the first network element requests the third network element to obtain the delay of the target data stream. Based on the obtained delay of the target data stream, the delay difference between the two target data streams is determined, and then the ratio of the delay difference to the maximum allowable delay difference is determined.

### (4) a ratio of the delay to a maximum allowable delay

In an embodiment of the present invention, at least one data stream of the service is transmitted between the terminal and the second network element. For the second network element, the second network element carries the request for subscribing to the delay of the data stream in the subscription request, so that the first network element can request the delay of the data stream from the third network element, and then determine the ratio of the delay to the maximum allowable delay.

It should be noted that in an embodiment of the present invention, the subscription request carries the event requested to be subscribed, and the delay difference information requested to be subscribed by the second network element is indicated by the carried event. It can also be understood that the subscription request includes an event, and the first and third network elements can determine the delay difference information corresponding to the event after receiving the subscription request, and then monitor based on the event to obtain the delay difference information indicated by the event.

In the solution provided by the embodiments of the invention, the corresponding delay difference of data streams is obtained by including the event requested to be subscribed in the subscription request, so as to facilitate the execution of the event included in the subscription request by the first and second network elements, thereby improving the diversity of execution events and enhancing the reliability of service operation.

On the basis of the embodiment shown in Fig_{∘} 2, the second network element carries event filtering information in the sent subscription request, so as to indicate the characteristics of the reported data stream through the event filtering information. It can also be understood that the type of delay difference of the data stream included in the report information is indicated through the event filtering information.

In some embodiments, the delay difference includes at least one of:
(1) average delay difference;
(2) maximum delay difference;
(3) minimum delay difference; or
(4) delay difference range.

The delay difference in the present embodiment is similar to that in the above embodiments, and will not be repeated here.

In some embodiments, the event filtering information includes at least one of:
(1) Single-Network Slice Selection Assistance Information (S-NSSAI) and service ID (identifier);
(2) S-NSSAI and Service Group ID;
(3) S-NSSAI and terminal IDs in the service group;
(4) S-NSSAI, data network name (DNN), and service ID;
(5) S-NSSAI, DNN, and service group ID;
(6) S-NSSAI and DNN;
(7) terminal IDs in the service group;
(8) DNN and service ID;
(9) DNN and service group ID; or
(10) DNN and the terminal IDs in the service group.

On the basis of the embodiment shown in Fig. 2, the subscription request also includes an event reporting mode for requesting subscription, which indicates the conditions for sending report information. The event reporting mode includes any of the following:
(1) triggering a threshold for reporting, and reporting a current threshold when the threshold is reached
   The threshold indicates the threshold at which an event is reached or triggered. That is to say, in embodiments of the present invention, when the threshold is reached, the current threshold is reported.
   For example, the threshold refers to the value corresponding to the delay or the value corresponding to the delay difference.
(2) triggering a periodic time interval for reporting, and reporting the current value when the periodic time interval is reached.

The periodic time interval refers to the time interval between the arrival or triggering of an event. It can also be understood that in this application, the sending of report information is triggered periodically.

In some embodiments, periodic transmission of report information is achieved by setting a periodic timer. If the periodic timer expires, it is determined that the measured information needs to be reported.

For example, in an embodiment of the present invention, UPF measures subscribed events and reports the measured information to the third network element when the periodic timer expires.

In the solution provided by the embodiments of the present invention, the threshold or periodic time interval for triggering reporting is set to ensure the reporting of information, thereby improving the efficiency of reporting information and ensuring the reliability of communication.

It should be noted that the present embodiment is illustrated using the example of including an event reporting mode in the subscription request. In another embodiment, the subscription request includes an immediate report flag, which indicates that upon receiving the subscription request sent by the second network element, the current statistical value is immediately reported based on the subscription request.

In some embodiments, the subscription request includes 1 bit to indicate the immediate report flag, and if the bit is 1, it indicates that the current statistical value needs to be reported immediately.

On the basis of the embodiment shown in Fig. 2, the first network element can identify both the application identifier or service identifier, as well as the slice identifier, while the second network element can identify the application identifier or service identifier, and the third network element can identify the slice identifier. Therefore, for the first network element, it needs to convert the application identifier or service identifier sent by the second network element into a slice identifier, and convert the slice identifier sent by the third network element into an application identifier or slice identifier.

In some embodiments, the first network element maps the application identifier or service identifier in the subscription request to a slice identifier based on the subscription request.

In an embodiment of the present invention, the first network element receives the subscription request, which includes the application identifier or service identifier sent by the second network element. Since the first network element needs to send the subscription request to the third network element, which can identify the slice identifier, the first network element maps the application identifier or service identifier in the subscription request to the slice identifier and then sends the slice identifier.

In other embodiments, the first network element maps the slice identifier in the subscription request to the application identifier or service identifier based on the subscription request.

In an embodiment of the present invention, the first network element receives the report information, which includes the slice identifier sent by the third network element. Since the first network element needs to send the report information to the second network element, which can identify the application identifier and service identifier, the first network element maps the slice identifier in the report information to the application identifier or service identifier, and then sends the application identifier or service identifier.

In the solution provided in the embodiments of the present invention, the first network element completes the mapping between the slice identifier and the service identifier or application identifier, thereby ensuring communication between the first network element and other network elements and ensuring communication reliability.

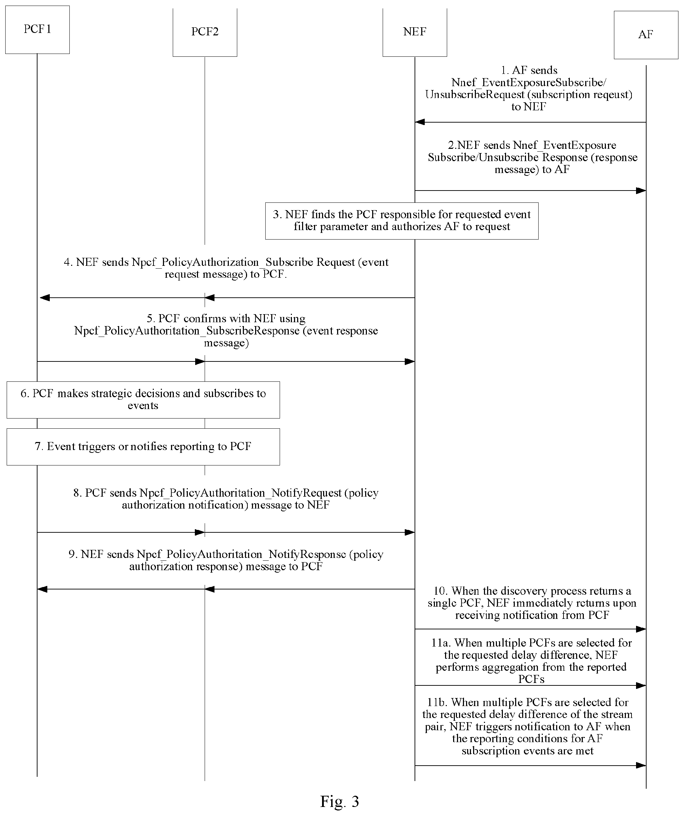

The above embodiments respectively explain the interaction between the first network element, the second network element, and the third network element. Next, taking the first network element as NEF network element, the second network element as AF network element, and the third network element as PCF network element as an example for explanation. Moreover, PCF network elements include PCF network element 1 and PCF network element 2. Fig. 3 shows a flowchart of a method for reporting delay difference information provided by an exemplary embodiment of the present invention. Referring to Fig. 3, the method includes followings.
1. AF sends Nnef_EventExposureSubscribe/UnsubscribeRequest (subscription reqeust) to NEF.

Nnef_EventExposureSubscribe/UnsubscribeRequest includes event ID, event filtering information, event reporting information, delay difference, S-NSSAI, immediate reporting, DNN, application ID, group ID, and terminal address.

The event ID parameter defines the subscribed event ID, which is the delay difference between a pair of XRM services and multimodal data streams.

The event filter parameter defines S-NSSAI (in the case of trusted or untrusted AF-Service-Identifier), S-NSSAI and DNN, XRM service group ID, terminal ID, and requests XRM service subscription for it.

The event report information parameter defines the reporting mode, including thresholds or periodic reports with periodic time intervals, and an immediate reporting flag if requested.

When the subscribed delay difference of the multimodal data stream reaches a threshold, notifications related to threshold based subscriptions will be sent. Every time it changes from below the threshold to reaching the threshold, a notification is sent.

2. NEF sends Nnef_EventExposure Subscribe/Unsubscribe Response (response message) to AF.

3. NEF finds the PCF responsible for requested event filter parameter and authorizes AF to request.

For example, S-NSSAI and Service ID, or S-NSSAI and Service Group ID, or S-NSSAI and DNN and Service ID, or S-NSSAI and DNN and Service Group ID; S-NSSAI and terminal ID within the service group, or S-NSSAI and terminal ID within the service group, or S-NSSAI and DNN and terminal ID within the service group, or S-NSSAI and DNN and terminal ID within the service group.

NEF can query NRF to find the PCF responsible for the event filter parameter requested. If necessary, NEF converts the AF-Service-Identifier to the corresponding S-NSSAI before executing the query.

4. NEF sends Npcf_PolicyAuthorization_Subscribe Request (event request message) to PCF.

If the NEF has not subscribed to events for requested event filter from the PCF, the NEF will initiate a request Npc_PolicyAuthoritation_Subscribe Request to all PCFs that support the requested two streams.

Npc_PolicyAuthoritation_Subscribe Request includes event ID, event filter, event report information, immediate report, and S-NSSAI.

NEF stores event report information that AF requests. If multiple PCFs are selected for the requested data streams, NEF can set event reporting information to be periodic in its requests to PCFs. If a single PCF is selected, NEF sets the event report information to be the same as the request received from AF. NEF also sets the event ID and event filter to be the same as the requests received from AF. (The selected cycle is chosen by NEF based on its internal logic or AF request).

5. PCF confirms with NEF using Npcf_PolicyAuthoritation_SubscribeResponse (event response message).

6. PCF makes strategic decisions and subscribes to events.

PCF makes policy decisions and subscribes to events requested by AF or NEF. In order to subscribe to the requested 5G delay difference, PCF may trigger QoS monitoring of specific data flow pairs to obtain end-to-end delay and calculate the delay difference.

For example, PCF initiates an SM policy association modification request to SMF. According to the QoS monitoring policy for measurement from PCF, SMF generates QoS monitoring configurations for UPF and RAN (if necessary).

7. Event triggers or notifies reporting to PCF.

When an event is detected/reached, a report will be triggered, such as reaching a threshold or a periodic timer timeout.

For example, UPF triggers a report message to report the measured information (end-to-end delay, delay difference) to PCF.

If PCF is informed of the requested 5G delay difference, PCF can send such information to NEF. If PCF finds that the delay difference is greater than the delay difference threshold provided by AF, PCF can notify NEF of this information, as well as the real-time delay value of this pair of streams.

Based on this notification, PCF can adjust the relevant PCC (Policy Control and Charging) rules for one or each in one pair of streams, such as downgrading or upgrading QoS (Quality of Service) authorizations.

8. PCF sends Npcf_PolicyAuthoritation_NotifyRequest (policy authorization notification) message to NEF.

Npcf_PolicyAuthoritation_NotifyRequest includes event ID, event filter and event report information.

If the subscription is for event based notifications (e.g. monitoring based events reaching a threshold), the event report information parameter includes confirmation of event completion.

If the subscription is for regular notifications or instant reports, the event report information parameter provides information on the current delay and delay difference (such as delay difference, or expressed as a percentage of the maximum delay difference).

9. NEF sends Npcf_PolicyAuthoritation_NotifyResponse (policy authorization response) message to PCF.

10. When the discovery process returns a single PCF, NEF immediately returns upon receiving notification from PCF.

In the case of untrusted AF, NEF includes the AF-Service-Identifier corresponding to S-NSSAI in the returned notification.

11a. When multiple PCFs are selected for the requested delay difference, NEF performs aggregation from the reported PCFs.

As long as the subscription is active, NEF will maintain the overall calculation of a specific pair of streams (including real-time end-to-end delay and delay difference) for the selected PCF. If multiple PCFs are selected for the requested delay difference of this pair of streams, the NEF will continuously update the aggregated information to meet the incoming subscription request from AF.

11b. When multiple PCFs are selected for the requested delay difference of the stream pair, NEF triggers notification to AF when the reporting conditions for AF subscription events are met.

In the case of untrusted AF, NEF includes the AF-Service-Identifier corresponding to S-NSSAI in the returned notification.

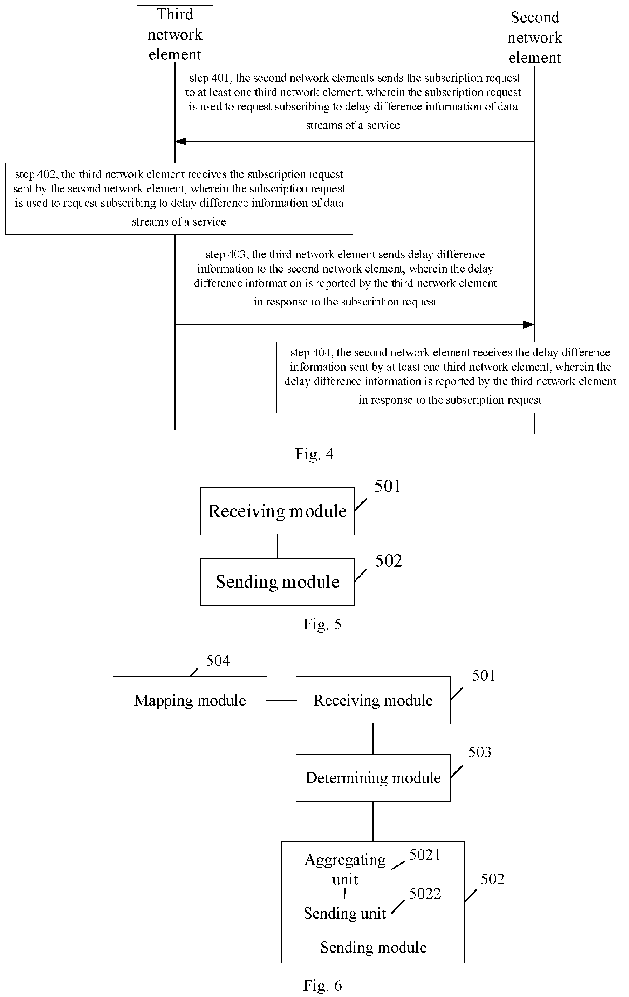

The embodiment shown in Fig. 2 illustrates the interaction between the first network element, the second network element, and the third network element to achieve information reporting. In other embodiments, the second network element and the third network element can also directly interact with each other. Fig. 4 shows a flowchart of a method for reporting delay difference information provided by an exemplary embodiment of the present invention, which can be applied to the network elements included in the core network device as shown in Fig. 1. The method includes at least some of the following contents.

In step 401, the second network elements sends the subscription request to at least one third network element, wherein the subscription request is used to request subscribing to delay difference information of data streams of a service.

In an embodiment of the present invention, te second network element determines the delay difference information of the data stream it needs to subscribe to, and then sends the subscription request to at least one third network element. The third network element then performs the subsequent steps to send the report information.

In some embodiments, the second network element determines at least one third network element, and sends the subscription request to each third network element.

In other embodiments, the second network element sends the subscription request to the default third network element in the multiple third network elements.

The process of determining the third network element by the second network element in the present embodiment is similar to the process of determining the third network element by the first network element in the above embodiments and will not be repeated here.

It should be noted that in this application, if the second network element sends the subscription request to the default third network element, the default third network element forwards the subscription request to other third network elements, the other third network elements respond to the subscription request and send the report information to the default third network element, and the default third network element aggregates the report information to obtain the delay difference information, and then sends the delay difference information to the second network element.

The scheme for aggregating report information by the default third network element is similar to the scheme for aggregating report information by the first network element in the above embodiments, and will not be repeated here.

In step 402, the third network element receives the subscription request sent by the second network element, wherein the subscription request is used to request subscribing to delay difference information of data streams of a service.

In some embodiments, the subscription request includes an event requested to be subscribed, and the event includes at least one of:
(1) requesting a latency of a target data stream;
(2) requesting a delay difference between any two target data streams;
(3) a ratio of a delay difference to a maximum allowable delay difference; or
(4) a ratio of a delay to a maximum allowable delay.

The event requested to be subscribed included in the subscription request in this embodiment of the invention is similar to the above embodiments and will not be repeated here.

In some embodiments, the subscription request includes event filtering information for requesting subscription; the event filtering information indicates characteristics of reported data stream; the delay difference includes at least one of:
(1) average delay difference;
(2) maximum delay difference;
(3) minimum delay difference; or
(4) delay difference range.

The types of delay differences included in this embodiment of the invention are similar to those in the above embodiments, and will not be repeated here.

In some embodiments, the event filtering information includes at least one of:
(1) Single-Network Slice Selection Assistance Information (S-NSSAI) and service ID;
(2) S-NSSAI and Service Group ID;
(3) S-NSSAI and terminal IDs in the service group;
(4) S-NSSAI, data network name (DNN), and service ID;
(5) S-NSSAI, DNN, and service group ID;
(6) S-NSSAI and DNN;
(7) terminal IDs in the service group;
(8) DNN and service ID;
(9) DNN and service group ID; or
(10) DNN and the terminal IDs in the service group.

In some embodiments, the subscription request includes an event reporting mode for requesting subscription, and the event reporting mode includes any one of:
triggering a threshold for reporting, and reporting a current threshold when the threshold is reached; or
triggering a periodic time interval for reporting, and reporting the current value when the periodic time interval is reached.

The event reporting mode in this embodiment of the present invention is similar to that in the above embodiments and will not be repeated here.

In some embodiments, the subscription request includes an immediate report flag; the immediate report flag indicates reporting a current statistical value immediately upon receiving the subscription request.

The immediate report flag in this embodiment of the present invention is similar to that in the above embodiments and will not be repeated here.

In step 403, the third network element sends delay difference information to the second network element, wherein the delay difference information is reported by the third network element in response to the subscription request.

In step 404, the second network element receives the delay difference information sent by at least one third network element, wherein the delay difference information is reported by the third network element in response to the subscription request.

After receiving the subscription request, the third network element obtains the delay difference information in response to the subscription request, and then sends the delay difference information to the second network element. The second network element can receive the delay difference information sent by the at least one third network element.

In the solution provided by embodiments of the present invention, a scheme for subscribing to delay difference information of data streams is provided, in which the third network element reports the subscribed delay difference information, ensuring the accuracy of the reported delay difference between the data streams, thereby ensuring the collaborative effect between data streams and improving the reliability of service operation.

Fig. 5 shows a block diagram of an apparatus for reporting delay difference information provided in an exemplary embodiment of the present invention. As shown in Fig. 5, the apparatus includes a receiving module 501 and a sending module 502.

The receiving module 501 is configured to receive a subscription request sent by a second network element, wherein the subscription request is used to request subscribing to delay difference information of data streams of service.

The sending module 502 is configured to send the subscription request to a third network element.

The receiving module 501 is configured to receive report information sent by the third network element in response to the subscription request.

The sending module 502 is configured to send delay difference information to the second network element, wherein the delay difference information is determined based on the report information.

In some embodiments, referring to Fig. 6, the apparatus further includes:
a determining module 503, configured to determine at least one third network element based on the subscription request, and send the subscription request to each third network element;
   or,
the sending module 502 is configured to send the subscription request to a default third network element based on the subscription request.

In some embodiments, the determining module 503 is configured to:
determine the at least one third network element based on the subscription request and a network storage function, or,
determine the at least one third network element based on the subscription request and configuration information.

In some embodiments, the sending module 502 is configured to send the subscription request to each of the multiple third network elements;
or, the sending module 502 is configured to send the subscription request to the default third network element among multiple third network elements.

In some embodiments, the receiving module 501 is configured to receive the report information sent by each of the multiple third network elements.

In some embodiments, referring to Fig. 6, the sending module 502 includes:
an aggregating unit 5021, configured to aggregate multiple report information to obtain the delay difference information; and
a sending unit 5022, configured to send the delay difference information to the second network element.

In some embodiments, the report information includes a delay; the determining module 503 is configured to determine a delay difference between the data streams of the service based on the delay sent by each of the multiple third network elements;
the sending module 502 is configured to send the delay and/or delay difference to the second network element.

In some embodiments, the delay and the delay difference are statistical values at a current time; or, the delay and the delay difference are statistical values within a first duration.

In some embodiments, the subscription request includes an event requested to be subscribed, and the event includes at least one of:
requesting a latency of a target data stream;
requesting a delay difference between any two target data streams;
a ratio of a delay difference to a maximum allowable delay difference; or
a ratio of a delay to a maximum allowable delay.

In some embodiments, the subscription request includes event filtering information for requesting subscription; the event filtering information indicates characteristics of reported data stream; the delay difference includes at least one of:
average delay difference;
maximum delay difference;
minimum delay difference; or
delay difference range.

In some embodiments, the event filtering information includes at least one of:
Single-Network Slice Selection Assistance Information (S-NSSAI) and service ID;
S-NSSAI and Service Group ID;
S-NSSAI and terminal IDs in the service group;
S-NSSAI, data network name (DNN), and service ID;
S-NSSAI, DNN, and service group ID;
S-NSSAI and DNN;
terminal IDs in the service group;
DNN and service ID;
DNN and service group ID; or
DNN and the terminal IDs in the service group.

In some embodiments, the subscription request includes an event reporting mode for requesting subscription, and the event reporting mode includes any one of:
triggering a threshold for reporting, and reporting a current threshold when the threshold is reached; or
triggering a periodic time interval for reporting, and reporting the current value when the periodic time interval is reached.

In some embodiments, the subscription request includes an immediate report flag; the immediate report flag indicates reporting a current statistical value immediately upon receiving the subscription request.

In some embodiments, the apparatus further includes:
a mapping module 504, configured to map an application identifier or service identifier in the subscription request to a slice identifier based on the subscription request;
the mapping module 504 is further configured to map the slice identifier in the report information to the application identifier or service identifier based on the report information.

It should be noted that the apparatus provided in the above embodiments only provides examples of the division of the above functional modules when implementing its functions. In practical applications, the above functions can be assigned to different functional modules as needed, that is, the internal structure of the apparatus can be divided into different functional modules to complete all or part of the functions described above. In addition, the apparatus and method embodiments provided in the above embodiments belong to the same concept, and the specific implementation process is detailed in the method embodiments, which will not be repeated here.

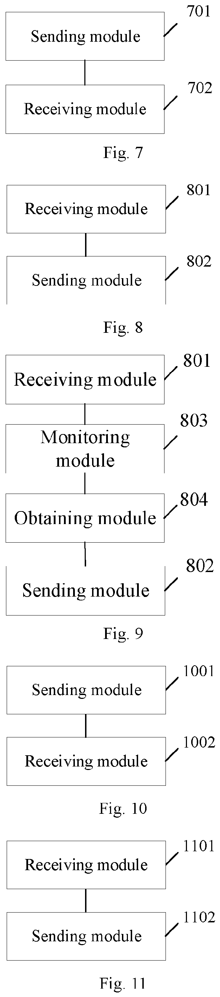

Fig. 7 shows a block diagram of an apparatus for reporting delay difference information provided in an exemplary embodiment of the present invention. Referring to Fig. 7, the apparatus includes:
a sending module 701, configured to send a subscription request to at least one third network element, wherein the subscription request is used to request subscribing to delay difference information of data streams of service;
a receiving module 702, configured to receive delay difference information sent by the at least one third network element, wherein the delay difference information is reported by the third network element in response to the subscription request.

In some embodiments, the subscription request includes an event requested to be subscribed, and the event includes at least one of:
requesting a latency of a target data stream;
requesting a delay difference between any two target data streams;
a ratio of a delay difference to a maximum allowable delay difference; or
a ratio of a delay to a maximum allowable delay.

In some embodiments, the subscription request includes event filtering information for requesting subscription; the event filtering information indicates characteristics of reported data stream; the delay difference includes at least one of:
average delay difference;
maximum delay difference;
minimum delay difference; or
delay difference range.

In some embodiments, the event filtering information includes at least one of:
Single-Network Slice Selection Assistance Information (S-NSSAI) and service ID;
S-NSSAI and Service Group ID;
S-NSSAI and terminal IDs in the service group;
S-NSSAI, data network name (DNN), and service ID;
S-NSSAI, DNN, and service group ID;
S-NSSAI and DNN;
terminal IDs in the service group;
DNN and service ID;
DNN and service group ID; or
DNN and the terminal IDs in the service group.

In some embodiments, the subscription request includes an event reporting mode for requesting subscription, and the event reporting mode includes any one of:
triggering a threshold for reporting, and reporting a current threshold when the threshold is reached; or
triggering a periodic time interval for reporting, and reporting the current value when the periodic time interval is reached.

In some embodiments, the subscription request includes an immediate report flag, the immediate report flag indicates reporting a current statistical value immediately upon receiving the subscription request.

It should be noted that the apparatus provided in the above embodiments only provides examples of the division of the above functional modules when implementing its functions. In practical applications, the above functions can be assigned to different functional modules as needed, that is, the internal structure of the apparatus can be divided into different functional modules to complete all or part of the functions described above. In addition, the apparatus and method embodiments provided in the above embodiments belong to the same concept, and the specific implementation process is detailed in the method embodiments, which will not be repeated here.

Fig. 8 shows a block diagram of an apparatus for reporting delay difference information provided in an exemplary embodiment of the present invention. Referring to Fig. 8, the apparatus includes:
a receiving module 801, configured to receive a subscription request sent by a first network element, wherein the subscription request is used to request subscribing to delay difference information of data streams of a service;
a sending module 802, configured to send report information to the first network element in response to the subscription request.

In some embodiments, the subscription request includes an event requested to be subscribed, and the event includes at least one of:
requesting a latency of a target data stream;
requesting a delay difference between any two target data streams;
a ratio of a delay difference to a maximum allowable delay difference; or
a ratio of a delay to a maximum allowable delay.

In some embodiments, the subscription request includes event filtering information for requesting subscription; the event filtering information indicates characteristics of reported data stream; the delay difference includes at least one of:
average delay difference;
maximum delay difference;
minimum delay difference; or
delay difference range.

In some embodiments, the event filtering information includes at least one of:
Single-Network Slice Selection Assistance Information (S-NSSAI) and service ID;
S-NSSAI and Service Group ID;
S-NSSAI and terminal IDs in the service group;
S-NSSAI, data network name (DNN), and service ID;
S-NSSAI, DNN, and service group ID;
S-NSSAI and DNN;
terminal IDs in the service group;
DNN and service ID;
DNN and service group ID; or
DNN and the terminal IDs in the service group.

In some embodiments, the subscription request includes an event reporting mode for requesting subscription, and the event reporting mode includes any one of:
triggering a threshold for reporting, and reporting a current threshold when the threshold is reached; or
triggering a periodic time interval for reporting, and reporting the current value when the periodic time interval is reached.

In some embodiments, the subscription request includes an immediate report flag, the immediate report flag indicates reporting a current statistical value immediately upon receiving the subscription request.

In some embodiments, referring to Fig. 9, the apparatus further includes:
a monitoring module 803, configured to trigger monitoring of the data stream requested for subscription;
an obtaining module 804, configured to obtain the delay of the data stream.

It should be noted that the apparatus provided in the above embodiments only provides examples of the division of the above functional modules when implementing its functions. In practical applications, the above functions can be assigned to different functional modules as needed, that is, the internal structure of the apparatus can be divided into different functional modules to complete all or part of the functions described above. In addition, the apparatus and method embodiments provided in the above embodiments belong to the same concept, and the specific implementation process is detailed in the method embodiments, which will not be repeated here.

Fig. 10 shows a block diagram of an apparatus for reporting delay difference information provided in an exemplary embodiment of the present invention. Referring to Fig. 10, the apparatus includes:
a sending module 1001, configured to send a subscription request to at least one third network element, wherein the subscription request is used to request subscribing to delay difference information of data streams of service; and
a receiving module 1002, configured to receive delay difference information sent by the at least one third network element, wherein the delay difference information is reported by the third network element in response to the subscription request.

In some embodiments, the sending module 1001 is further configured to:
determine at least one third network element, and send the subscription request to each third network element;
   or,
send the subscription request to a default third network element in multiple third network elements.

In some embodiments, the subscription request includes an event requested to be subscribed, and the event includes at least one of:
requesting a latency of a target data stream;
requesting a delay difference between any two target data streams;
a ratio of a delay difference to a maximum allowable delay difference; or
a ratio of a delay to a maximum allowable delay.

In some embodiments, the subscription request includes event filtering information for requesting subscription; the event filtering information indicates characteristics of reported data stream; the delay difference includes at least one of:
average delay difference;
maximum delay difference;
minimum delay difference; or
delay difference range.

In some embodiments, the event filtering information includes at least one of:
Single-Network Slice Selection Assistance Information (S-NSSAI) and service ID;
S-NSSAI and Service Group ID;
S-NSSAI and terminal IDs in the service group;
S-NSSAI, data network name (DNN), and service ID;
S-NSSAI, DNN, and service group ID;
S-NSSAI and DNN;
terminal IDs in the service group;
DNN and service ID;
DNN and service group ID; or
DNN and the terminal IDs in the service group.

In some embodiments, the subscription request includes an event reporting mode for requesting subscription, and the event reporting mode includes any one of:
triggering a threshold for reporting, and reporting a current threshold when the threshold is reached; or
triggering a periodic time interval for reporting, and reporting the current value when the periodic time interval is reached.

In some embodiments, the subscription request includes an immediate report flag, the immediate report flag indicates reporting a current statistical value immediately upon receiving the subscription request.

It should be noted that the apparatus provided in the above embodiments only provides examples of the division of the above functional modules when implementing its functions. In practical applications, the above functions can be assigned to different functional modules as needed, that is, the internal structure of the apparatus can be divided into different functional modules to complete all or part of the functions described above. In addition, the apparatus and method embodiments provided in the above embodiments belong to the same concept, and the specific implementation process is detailed in the method embodiments, which will not be repeated here.

Fig. 11 shows a block diagram of an apparatus for reporting delay difference information provided in an exemplary embodiment of the present invention. Referring to Fig. 11, the apparatus includes:

a receiving module 1101, configured to receive a subscription request sent by a second network element, wherein the subscription request is used to request subscribing to delay difference information of data streams of a service;

a sending module 1102, configured to send delay difference information to the second network element, wherein the delay difference information is reported by the third network element in response to the subscription request.

In some embodiments, the subscription request includes an event requested to be subscribed, and the event includes at least one of:
requesting a latency of a target data stream;
requesting a delay difference between any two target data streams;
a ratio of a delay difference to a maximum allowable delay difference; or
a ratio of a delay to a maximum allowable delay.

In some embodiments, the subscription request includes event filtering information for requesting subscription; the event filtering information indicates characteristics of reported data stream; the delay difference includes at least one of:
average delay difference;
maximum delay difference;
minimum delay difference; or
delay difference range.

In some embodiments, the event filtering information includes at least one of:
Single-Network Slice Selection Assistance Information (S-NSSAI) and service ID;
S-NSSAI and Service Group ID;
S-NSSAI and terminal IDs in the service group;
S-NSSAI, data network name (DNN), and service ID;
S-NSSAI, DNN, and service group ID;
S-NSSAI and DNN;
terminal IDs in the service group;
DNN and service ID;
DNN and service group ID; or
DNN and the terminal IDs in the service group.

In some embodiments, the subscription request includes an event reporting mode for requesting subscription, and the event reporting mode includes any one of:
triggering a threshold for reporting, and reporting a current threshold when the threshold is reached; or
triggering a periodic time interval for reporting, and reporting the current value when the periodic time interval is reached.

In some embodiments, the subscription request includes an immediate report flag, the immediate report flag indicates reporting a current statistical value immediately upon receiving the subscription request.

It should be noted that the apparatus provided in the above embodiments only provides examples of the division of the above functional modules when implementing its functions. In practical applications, the above functions can be assigned to different functional modules as needed, that is, the internal structure of the apparatus can be divided into different functional modules to complete all or part of the functions described above. In addition, the apparatus and method embodiments provided in the above embodiments belong to the same concept, and the specific implementation process is detailed in the method embodiments, which will not be repeated here.

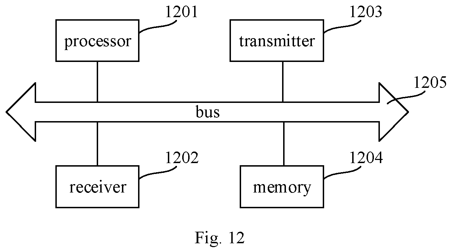

Fig. 12 shows a schematic diagram of a structure of a communication device provided by an exemplary embodiment of the present invention. The communication device includes a processor 1201, a receiver 1202, a transmitter 1203, a memory 1204, and a bus 1205.

The processor 1201 includes one or more processing cores, and the processor 1201 executes various functional applications and information processing by running software programs and modules.

The receiver 1202 and the transmitter 1203 can be implemented as a communication component, which may be a communication chip.

The memory 1204 is connected to the processor 1201 through the bus 1205.

The memory 1204 can be used to store at least one program code, and the processor 1201 is configured to execute the at least one program code to implement the various steps in the above method embodiments.

In addition, the communication device may be a core network device. The memory 1004 can be implemented by any type of volatile or non-volatile storage device or combination thereof, including but not limited to: magnetic or optical disks, electrically erasable programmable read-only memory (EEPROM), erasable programmable read-only memory (EPROM), static ready to access memory (SRAM), read-only memory (ROM), magnetic memory, flash memory, programmable read-only memory (PROM).

In an exemplary embodiment, a computer-readable storage medium is also provided, which stores executable program code loaded and executed by a processor to implement the method for reporting delay difference information executed by a communication device provided by the various method embodiments described above.

In an exemplary embodiment, a chip is provided that includes programmable logic circuits and/or program instructions for implementing the method for reporting delay difference information as provided in various method embodiments when the chip runs on a network element.

In an exemplary embodiment, a computer program product is provided that, when executed by a processor of a network element, is configured to implement the method for reporting delay difference information provided by the various method embodiments described above.

Ordinary technical personnel in this field can understand that all or part of the steps to implement the above embodiments can be completed by hardware, or by instructing relevant hardware through programs. The programs can be stored in a computer-readable storage medium, such as read-only memory, magnetic disk, or optical disk.

The above description is only optional embodiments of the present application and is not intended to limit the present application. Any modifications, equivalent substitutions, improvements, etc. made within the principles of the present application shall be included in the scope of protection of the present application.

## Claims

1. A method for reporting delay difference information, performed by a first network element, the method comprising:
receiving a subscription request sent by a second network element, wherein the subscription request is used to request subscribing to delay difference information of data streams of service;
sending the subscription request to a third network element;
receiving report information sent by the third network element in response to the subscription request; and
sending delay difference information to the second network element, wherein the delay difference information is determined based on the report information.

2. The method of claim 1, wherein sending the subscription request to the third network element comprises:
determining at least one third network element based on the subscription request, and sending the subscription request to each third network element;
or,
sending the subscription request to a default third network element based on the subscription request.

3. The method of claim 2, wherein determining at least one third network element based on the subscription request comprises:
determining the at least one third network element based on the subscription request and a network storage function, or,
determining the at least one third network element based on the subscription request and configuration information.

4. The method of claim 2, wherein the at least one third network element comprises multiple third network elements, and sending the subscription request to each third network element comprises: sending the subscription request to each of the multiple third network elements;or, sending the subscription request to the default third network element comprises: sending the subscription request to the default third network element among multiple third network elements.

5. The method of claim 4, wherein receiving report information sent by the third network element in response to the subscription request comprises:
receiving the report information sent by each of the multiple third network elements.

6. The method of claim 5, wherein sending delay difference information to the second network element comprises:
aggregating multiple report information to obtain the delay difference information; and
sending the delay difference information to the second network element.

7. The method of claim 6, wherein the report information comprises a delay; aggregating multiple report information to obtain the delay difference information comprises:
determining a delay difference between the data streams of the service based on the delay sent by each of the multiple third network elements;
sending of the delay difference information to the second network element comprises:
sending the delay and/or delay difference to the second network element.

8. The method of claim 7, wherein the delay and the delay difference are statistical values at a current time; or, the delay and the delay difference are statistical values within a first duration.

9. The method of any of claims 1-8, wherein the subscription request comprises an event requested to be subscribed, and the event comprises at least one of:
requesting a latency of a target data stream;
requesting a delay difference between any two target data streams;
a ratio of a delay difference to a maximum allowable delay difference; or
a ratio of a delay to a maximum allowable delay.

10. The method of any of claims 1-8, wherein the subscription request comprises event filtering information for requesting subscription; the event filtering information indicates characteristics of reported data stream; and the delay difference comprises at least one of:
average delay difference;
maximum delay difference;
minimum delay difference; or
delay difference range.

11. The method of claim 10, wherein the event filtering information comprises at least one of:
Single-Network Slice Selection Assistance Information (S-NSSAI) and service ID;
S-NSSAI and Service Group ID;
S-NSSAI and terminal IDs in the service group;
S-NSSAI, data network name (DNN), and service ID;
S-NSSAI, DNN, and service group ID;
S-NSSAI and DNN;
terminal IDs in the service group;
DNN and service ID;
DNN and service group ID; or
DNN and the terminal IDs in the service group.

12. The method of any of claims 1-8, wherein the subscription request comprises an event reporting mode for requesting subscription, and the event reporting mode comprises any one of:
triggering a threshold for reporting, and reporting a current threshold when the threshold is reached; or
triggering a periodic time interval for reporting, and reporting the current value when the periodic time interval is reached.

13. The method of any of claims 1-8, wherein the subscription request comprises an immediate report flag; the immediate report flag indicates reporting a current statistical value immediately upon receiving the subscription request.

14. The method of any of claims 1-8, further comprising:
mapping an application identifier or service identifier in the subscription request to a slice identifier based on the subscription request; and
mapping the slice identifier in the report information to the application identifier or service identifier based on the report information.

15. A method for reporting delay difference information, performed by a second network element, the method comprising:
sending a subscription request to a first network element, wherein the subscription request is used to request subscribing to delay difference information of data streams of service; and
receiving delay difference information sent by the first network element, wherein the delay difference information is determined based on report information, and the report information is reported by a third network element in response to the subscription request.

16. The method of claim 15, wherein the subscription request comprises an event requested to be subscribed, and the event comprises at least one of:
requesting a latency of a target data stream;
requesting a delay difference between any two target data streams;
a ratio of a delay difference to a maximum allowable delay difference; or
a ratio of a delay to a maximum allowable delay.

17. The method of claim 15 or 16, wherein the subscription request comprises event filtering information for requesting subscription; the event filtering information indicates characteristics of reported data stream; and the delay difference comprises at least one of:
average delay difference;
maximum delay difference;
minimum delay difference; or
delay difference range.

18. The method of claim 17, wherein the event filtering information comprises at least one of:
Single-Network Slice Selection Assistance Information (S-NSSAI) and service ID;
S-NSSAI and Service Group ID;
S-NSSAI and terminal IDs in the service group;
S-NSSAI, data network name (DNN), and service ID;
S-NSSAI, DNN, and service group ID;
S-NSSAI and DNN;
terminal IDs in the service group;
DNN and service ID;
DNN and service group ID; or
DNN and the terminal IDs in the service group.

19. The method of claim 15 or 16, wherein the subscription request comprises an event reporting mode for requesting subscription, and the event reporting mode comprises any one of:
triggering a threshold for reporting, and reporting a current value when the threshold is reached; or
triggering a periodic time interval for reporting, and reporting the current value when the periodic time interval is reached.

20. The method of claim 15 or 16, wherein the subscription request comprises an immediate report flag; the immediate report flag indicates reporting a current statistical value immediately upon receiving the subscription request.

21. A method for reporting delay difference information, performed by a third network element, the method comprising:
receiving a subscription request sent by a first network element, wherein the subscription request is used to request subscribing to delay difference information of data streams of service; and
sending report information to the first network element, in response to the subscription request.

22. The method of claim 21, wherein the subscription request comprises an event requested to be subscribed, and the event comprises at least one of:
requesting a latency of a target data stream;
requesting a delay difference between any two target data streams;
a ratio of a delay difference to a maximum allowable delay difference; or
a ratio of a delay to a maximum allowable delay.

23. The method of claim 21, wherein the subscription request comprises event filtering information for requesting subscription; the event filtering information indicates characteristics of reported data stream; and the delay difference comprises at least one of:
average delay difference;
maximum delay difference;
minimum delay difference; or
delay difference range.

24. The method of claim 23, wherein the event filtering information comprises at least one of:
Single-Network Slice Selection Assistance Information (S-NSSAI) and service ID;
S-NSSAI and Service Group ID;
S-NSSAI and terminal IDs in the service group;
S-NSSAI, data network name (DNN), and service ID;
S-NSSAI, DNN, and service group ID;
S-NSSAI and DNN;
terminal IDs in the service group;
DNN and service ID;
DNN and service group ID; or
DNN and the terminal IDs in the service group.

25. The method of claim 21, wherein the subscription request comprises an event reporting mode for requesting subscription, and the event reporting mode comprises any one of:
triggering a threshold for reporting, and reporting a current value when the threshold is reached; or
triggering a periodic time interval for reporting, and reporting the current value when the periodic time interval is reached.

26. The method of claim 21, wherein the subscription request comprises an immediate report flag; the immediate report flag indicates reporting a current statistical value immediately upon receiving the subscription request.

27. The method of claim 21, further comprising:
triggering monitoring of the data stream requested for subscription;
obtaining the delay of the data stream.

28. A method for reporting delay difference information, performed by a second network element, the method comprising:
sending a subscription request to at least one third network element, wherein the subscription request is used to request subscribing to delay difference information of data streams of service; and
receiving delay difference information sent by the at least one third network element, wherein the delay difference information is reported by the third network element in response to the subscription request.

29. The method of claim 28, further comprising:
determining at least one third network element, and sending the subscription request to each third network element;
or,
sending the subscription request to a default third network element among multiple third network elements.

30. The method of claim 28 or 29, wherein the subscription request comprises an event requested to be subscribed, and the event comprises at least one of:
requesting a latency of a target data stream;
requesting a delay difference between any two target data streams;
a ratio of a delay difference to a maximum allowable delay difference; or
a ratio of a delay to a maximum allowable delay.

31. The method of claim 28 or 29, wherein the subscription request comprises event filtering information for requesting subscription; the event filtering information indicates characteristics of reported data stream; and the delay difference comprises at least one of:
average delay difference;
maximum delay difference;
minimum delay difference; or
delay difference range.

32. The method of claim 31, wherein the event filtering information comprises at least one of:
Single-Network Slice Selection Assistance Information (S-NSSAI) and service ID;
S-NSSAI and Service Group ID;
S-NSSAI and terminal IDs in the service group;
S-NSSAI, data network name (DNN), and service ID;
S-NSSAI, DNN, and service group ID;
S-NSSAI and DNN;
terminal IDs in the service group;
DNN and service ID;
DNN and service group ID; or
DNN and the terminal IDs in the service group.

33. The method of claim 28 or 29, wherein the subscription request comprises an event reporting mode for requesting subscription, and the event reporting mode comprises any one of:
triggering a threshold for reporting, and reporting a current value when the threshold is reached; or
triggering a periodic time interval for reporting, and reporting the current value when the periodic time interval is reached.

34. The method of claim 28 or 29, wherein the subscription request comprises an immediate report flag; the immediate report flag indicates reporting a current statistical value immediately upon receiving the subscription request.

35. A method for reporting delay difference information, performed by a third network element, the method comprising:
receiving a subscription request sent by a second network element, wherein the subscription request is used to request subscribing to delay difference information of data streams of service; and
sending delay difference information to the second network element, wherein the delay difference information is reported by the third network element in response to the subscription request.

36. The method of claim 35, wherein the subscription request comprises an event requested to be subscribed, and the event comprises at least one of:
requesting a latency of a target data stream;
requesting a delay difference between any two target data streams;
a ratio of a delay difference to a maximum allowable delay difference; or
a ratio of a delay to a maximum allowable delay.

37. The method of claim 35, wherein the subscription request comprises event filtering information for requesting subscription; the event filtering information indicates characteristics of reported data stream; and the delay difference comprises at least one of:
average delay difference;
maximum delay difference;
minimum delay difference; or
delay difference range.

38. The method of claim 37, wherein the event filtering information comprises at least one of:
Single-Network Slice Selection Assistance Information (S-NSSAI) and service ID;
S-NSSAI and Service Group ID;
S-NSSAI and terminal IDs in the service group;
S-NSSAI, data network name (DNN), and service ID;
S-NSSAI, DNN, and service group ID;
S-NSSAI and DNN;
terminal IDs in the service group;
DNN and service ID;
DNN and service group ID; or
DNN and the terminal IDs in the service group.

39. The method of claim 35, wherein the subscription request comprises an event reporting mode for requesting subscription, and the event reporting mode comprises any one of:
triggering a threshold for reporting, and reporting a current value when the threshold is reached; or
triggering a periodic time interval for reporting, and reporting the current value when the periodic time interval is reached.

40. The method of claim 35, wherein the subscription request comprises an immediate report flag; the immediate report flag indicates reporting a current statistical value immediately upon receiving the subscription request.

41. An apparatus for reporting delay difference information, comprising:
a receiving module, configured to receive a subscription request sent by a second network element, wherein the subscription request is used to request subscribing to delay difference information of data streams of service; and
a sending module, configured to send the subscription request to a third network element;
the receiving module is further configured to receive report information sent by the third network element in response to the subscription request; and
the sending module is further configured to send delay difference information to the second network element, wherein the delay difference information is determined based on the report information.

42. An apparatus for reporting delay difference information, comprising:
a sending module, configured to send a subscription request to a first network element, wherein the subscription request is used to request subscribing to delay difference information of data streams of service; and
a receiving module, configured to receive delay difference information sent by the first network element, wherein the delay difference information is determined based on report information, and the report information is reported by a third network element in response to the subscription request.

43. An apparatus for reporting delay difference information, comprising:
a receiving module, configured to receive a subscription request sent by a first network element, wherein the subscription request is used to request subscribing to delay difference information of data streams of service; and
a sending module, configured to send report information to the first network element, in response to the subscription request.

44. An apparatus for reporting delay difference information, applied in a second network element, the apparatus comprising:
a sending module, configured to send a subscription request to at least one third network element, wherein the subscription request is used to request subscribing to delay difference information of data streams of service; and
a receiving module, configured to receive delay difference information sent by the at least one third network element, wherein the delay difference information is reported by the third network element in response to the subscription request.

45. An apparatus for reporting delay difference information, comprising:
a receiving module, configured to receive a subscription request sent by a second network element, wherein the subscription request is used to request subscribing to delay difference information of data streams of service; and
a sending module, configured to send delay difference information to the second network element, wherein the delay difference information is reported by the third network element in response to the subscription request.

46. A network element, comprising:
a processor; and
a transceiver coupled with the processor,
wherein the processor is configured to load and execute executable instructions, to implement the method for reporting delay difference information according to any of claims 1-40.

47. A computer readable storage medium, storing instructions, which when loaded and executed by a processor, the method of any of claims 1-40 is implemented.
